# EUROPÄISCHE PATENTSCHRIFT

(11) **EP 3 085 288 B1**
(45) Veröffentlichungstag und Bekanntmachung des Hinweises auf die Patenterteilung: **17.07.2019**
(21) Anmeldenummer: 16165745.7
(22) Anmeldetag: 18.04.2016
(51) Int. Cl.: A47J 37/10, A47J 43/28

(54) **VORRICHTUNG ZUM BRATEN VON BRATGUT ÜBER OFFENEM FEUER**
INSTALLATION FOR ROASTING OF BARBECUED FOOD OVER OPEN FIRE
DISPOSITIF DESTINÉ À RÔTIR UN PRODUIT SUR UN FEU DE BOIS

(30) Priorität: 20.04.2015 AT 503102015
(43) Veröffentlichungstag der Anmeldung: 26.10.2016
(73) Patentinhaber: Antl, Georg, 4452 Ternberg (AT)
(72) Erfinder: Antl, Georg, 4452 Ternberg (AT)
(74) Vertreter: Patentanwaltskanzlei Hübscher

(56) Entgegenhaltungen:
- WO-A1-2013/078524
- GB-A- 761 503
- US-A- 1 783 792

## Beschreibung

Die Erfindung bezieht sich auf eine Vorrichtung zum Braten von Bratgut über offenem Feuer mit zwei über ein Gelenk miteinander verbundenen Hebelarmen, deren eine Endabschnitte Griffe bilden und wobei der andere Endabschnitt des ersten Hebelarmes mit einer Pfanne zur Aufnahme des Bratgutes ausgerüstet ist.

Zum Wenden von Fleisch über einem offenen Feuer sind Grillzangen bekannt (US 2 511 142 A), die zwei über ein Gelenk miteinander verbundene Hebelarme aufweisen, die an ihrem einen Endabschnitt Haltegriffe und an ihrem anderen Endabschnitt pfannenartige Aufnahmen für das Grillgut aufweisen. Solche Grillzangen sind allerdings lediglich zum Wenden von Bratgut auf einem Rost geeignet, weil ein sicheres Halten des Bratgutes über einer offenen Wärmequelle, wie beispielsweise einem offenen Feuer, mit Schwierigkeiten verbunden ist, weil durch die Wärmeeinwirkung mit einer Verformung des Bratgutes bei gleichzeitigem Saftaustritt zu rechnen ist. Gerade das aus dem Bratgut austretende Fett bringt dabei das Risiko von Stichflammen mit sich.

Weiters ist aus der US 244913 A ist ein Broteisen bekannt, dass zwei Backeisenflächen aufweist, die völlig flach oder mit Gravierungen versehen sein können. Diese Broteisenflächen sind allerdings nicht zur Aufnahme von aus dem Bratgut austretenden Fett geeignet.

In der US 2511142 wird eine Zange mit zwei Aufnahmeschaufeln geoffenbart, die aufgrund Ihrer Formgebung die Gefahr bedingen, dass das Bratgut zwischen den Schaufeln hindurchrutscht. Aus diesem Grunde ist eine der Aufnahmeschaufeln mit Spitzen ausgestattet, die in das Bratgut eindringen, was zu einer unbeabsichtigten Beeinträchtigung des Bratgutes führt.

Schließlich sind aus der US 6539844 B1, der GB 761503 A und der US 1783792 A verschiedene Bratpfannen bekannt, die mit Vorrichtungen zum Niederdrücken von Bratgut ausgestattet sind.

Der Erfindung liegt somit die Aufgabe zugrunde, eine Vorrichtung zum Braten von Bratgut über offenem Feuer der eingangs geschilderten Art so auszugestalten, dass ein sicheres Halten des Bratgutes ermöglicht wird, ohne die Gefahr der Bildung von Stichflammen in Kauf nehmen zu müssen. Durch diese Maßnahmen kann das Bratgut zwischen dem Pressstempel und dem Pfannenboden sicher festgehalten werden, während sich austretender Bratensaft in der Pfanne des ersten Hebelarmes sammelt.

Die Erfindung löst die gestellte Aufgabe dadurch, dass der dem Griff gegenüberliegende Endabschnitt des zweiten Hebelarmes einen mit dem Pfannenboden zusammenwirkenden Pressstempel für das Bratgut aufweist. Um die Pfanne vollständig abschließen zu können, kann der Querschnitt des Pressstempels gleich dem lichten Maß der Pfanne sein.

Um Bratgut beliebiger Form und Größe zwischen dem Pressstempel und dem Pfannenboden festhalten zu können, wird vorgeschlagen, dass der Querschnitt des Pressstempels kleiner als das lichte Maß der Pfanne ist.

Zur Verhinderung einer Verformung des Bratgutes kann der zweite Hebelarm im Bereich der Pfannenwand so gekröpft sein, dass der Pressstempel bei einem Schließen der Zange bis zum Pfannenboden gelangt, ohne dass der Endabschnitt des Hebelarmes, der den Pressstempel trägt, an der Pfannenwand anschlägt. Die Form des Bratgutes kann dadurch vergleichbar mit bekannten Fleischpressen trotz der Wärmeeinwirkung gehalten werden.

Um die Kraftverhältnisse beim Braten des Bratgutes zu verbessern und um eine Wärmeübertragung zu den Griffen hin weitgehend zu vermeiden, können die Hebelarme auf der der Pfanne gegenüberliegenden Seite des Gelenkes wenigstens drei Mal so lang wie auf der Seite der Pfanne sein.

Um unter Vermeidung einer Stichflammenbildung den sich beim Braten bildenden Bratensaft sicher aus der Pfanne ausgießen zu können, kann die Pfanne einen Schnabel zum Ausgießen eines austretenden Bratensaftes aufweisen.

In der Zeichnung ist der Erfindungsgegenstand beispielsweise dargestellt. Es zeigen
- Fig. 1: eine Draufsicht einer erfindungsgemäßen Vorrichtung und

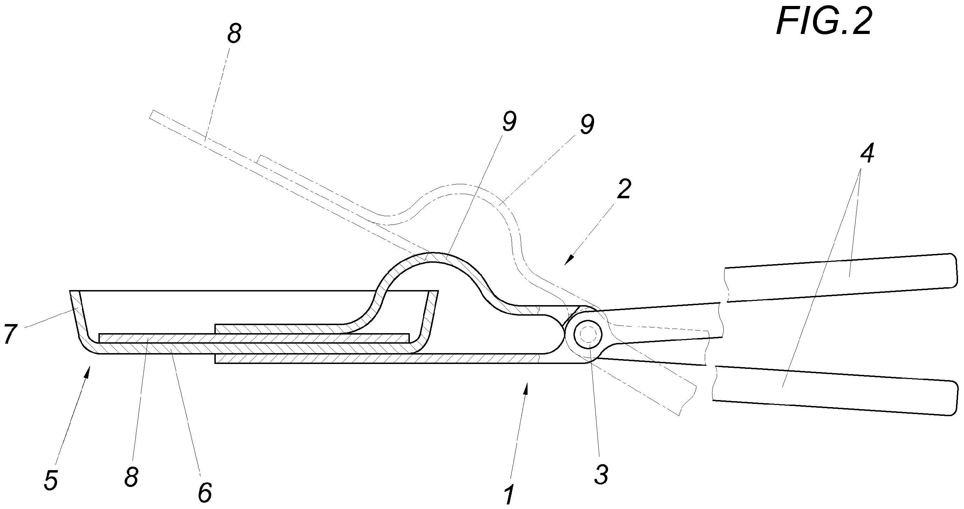

- Fig. 2: einen Schnitt der erfindungsgemäßen Vorrichtung entlang der Linie II-II der Fig. 1.

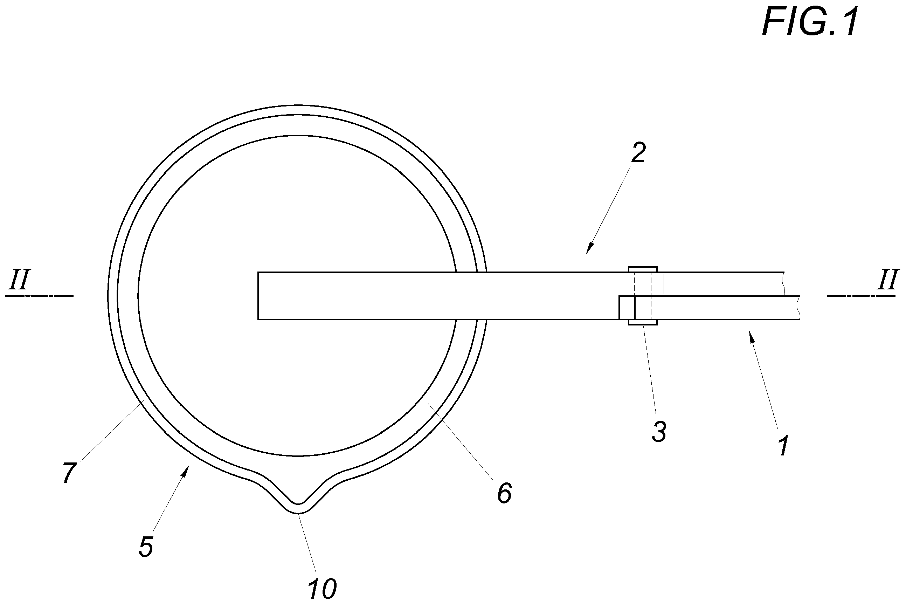

Die in der Zeichnung dargestellte erfindungsgemäße Vorrichtung umfasst einen ersten Hebelarm 1 und einen zweiten Hebelarm 2, die über ein Gelenk 3 miteinander verbunden sind. Die Hebelarme 1 und 2 bilden an ihrem einen Endabschnitt Griffe 4 zur Bedienung der Vorrichtung. An dem den Griffen 4 gegenüberliegenden Endabschnitt weist der erste Hebelarm 1 eine Pfanne 5 mit einem Pfannenboden 6 und einer Pfannenwand 7 auf. Der zweite Hebelarm 2 ist an diesem Endabschnitt mit einem Pressstempel 8 ausgerüstet, der mit dem Pfannenboden 6 zusammenwirkt. Der Querschnitt des Pressstempels 8 ist zu diesem Zweck kleiner als das lichte Maß der Pfanne 5, wie insbesondere der Fig. 1 entnommen werden kann.

Um zu verhindern, dass der den Pressstempel 8 aufweisende Endabschnitt des zweiten Hebelarms 2 beim Schließen der Vorrichtung mit der Pfannenwand 7 kollidiert, ist dieser zweite Hebelarm 2 im Bereich der Pfannenwand 7 mit einer Kröpfung 9 versehen. Die Kröpfung 9 ist dabei so ausgestaltet, dass der Pressstempel 8 beim Schließen der Vorrichtung den Pfannenboden 6 berührt.

Um die Hebelwirkung der erfindungsgemäßen Vorrichtung zu verbessern und eine Wärmeübertragung von der erhitzten Pfanne 5 zu den Griffen 4 hin zu vermeiden, können die Hebelarme 1, 2 auf der der Pfanne 5 gegenüberliegenden Seite des Gelenkes 3 wenigstens drei Mal so lang wie auf der Seite der Pfanne 5 sein.

Zum Ausgießen eines austretenden Bratensaftes aus der Pfanne 5 kann die Pfannenwand 7 mit einem Schnabel 10 versehen sein.

## Patentansprüche

1. Vorrichtung zum Braten von Bratgut über offenem Feuer mit zwei über ein Gelenk (3) miteinander verbundenen, gekreuzten Hebelarmen (1, 2), deren eine Endabschnitte Griffe (4) bilden und wobei der andere Endabschnitt des ersten Hebelarmes (1) mit einer Pfanne (5) zur Aufnahme des Bratgutes ausgerüstet ist, **dadurch gekennzeichnet, dass** der dem Griff (4) gegenüberliegende Endabschnitt des zweiten Hebelarmes (2) einen mit dem Pfannenboden (6) zusammenwirkenden Pressstempel (8) für das Bratgut aufweist und dass der Querschnitt des Pressstempels (8) kleiner als das lichte Maß der Pfanne (5) ist.

2. Vorrichtung nach Anspruch 1, **dadurch gekennzeichnet, dass** der zweite Hebelarm (2) im Bereich der Pfannenwand (6) gekröpft ist.

3. Vorrichtung nach einem der Ansprüche 1 oder 2, **dadurch gekennzeichnet, dass** die Hebelarme (1, 2) auf der der Pfanne (5) gegenüberliegenden Seite des Gelenkes (3) wenigstens drei Mal so lang wie auf der Seite der Pfanne (5) sind.

4. Vorrichtung nach einem der Ansprüche 1 bis 3, **dadurch gekennzeichnet, dass** die Pfanne (5) einen Schnabel (10) zum Ausgießen eines austretenden Bratensaftes aufweist.

## Claims

1. Device for roasting barbecue food over an open fire, having two crossed lever arms (1, 2) connected to one another via a hinge point (3), one end portion of these arms forming handles (4) and wherein the other end portion of the first lever arm (1) is fitted with a pan (5) for receiving the barbecue food, **characterised in that** the end portion of the second lever arm (2), opposite the handle (4), comprises a pressing tool (8) for the barbecue food, which cooperates with the pan bottom (6), and that the cross-section of the pressing tool (8) is smaller than the inside dimension of the pan (5).

2. Device as claimed in claim 1, **characterised in that** the second lever arm (2) is bent in the region of the pan wall (6).

3. Device as claimed in any one of claims 1 or 2, **characterised in that**, on the side of the hinge point (3) opposite the pan (5), the lever arms (1, 2) are at least three times as long as on the side where the pan (5) is.

4. Device as claimed in any one of claims 1 to 3, **characterised in that** the pan (5) has a spout (10) for pouring out juices running from the food.

## Revendications

1. Dispositif pour rôtir des aliments à griller sur un feu ouvert avec deux bras de levier croisés (1, 2), reliés ensemble par une articulation (3), qui forment des poignées de parties d'extrémité (4) et dans lequel l'autre partie d'extrémité du premier bras de levier (1) est munie d'un poêlon (5) pour recevoir les aliments à griller, **caractérisé en ce que** la partie d'extrémité opposée à la poignée (4) du second bras de levier (2) présente un élément de pressage (8) pour les aliments à griller coopérant avec le fond du poêlon (6) et **en ce que** la section transversale de l'élément de pressage (8) est inférieure à la dimension intérieure du poêlon (5).

2. Dispositif selon la revendication 1, **caractérisé en ce que** le second bras de levier (2) est coudé dans la zone de la paroi du poêlon (6).

3. Dispositif selon l'une des revendications 1 ou 2, **caractérisé en ce que** les bras de levier (1, 2) sur le côté faisant face au poêlon (5) de l'articulation (3) sont au moins trois fois aussi longs que sur le côté du poêlon (5).

4. Dispositif selon l'une des revendications 1 à 3, **caractérisé en ce que** le poêlon (5) comporte un bec (10) pour verser un jus d'aliment à griller qui s'en échappe.
